# EUROPEAN PATENT APPLICATION

(11) **EP 4 177 654 A1**
(43) Date of publication of application: **10.05.2023**
(21) Application number: 22201616.4
(22) Date of filing: 01.09.2016
(51) Int. Cl.: G02B 7/02

(54) **CAMERA MODULE FOR A MOTOR VEHICLE**

(62) Divisional of application: 16186859.1
(71) Applicant: Arriver Software AB, 583 30 Linköping (SE)
(72) Inventor: PERSSON, Madeleine, 58236 Linköping (SE); LINGEHED, Vincent, 58230 Linköping (SE); TORNQVIST, Filip, 59732 Åtvidaberg (SE)
(74) Representative: Loveless, Ian Mark

(57) **Abstract**

The present invention relates to a camera module (1) for a motor vehicle, comprising a lens objective (2) having an outer thread (7), a lens holder (3) holding said lens objective (2), and a back plate (4) connected to said lens holder (3) and holding an image sensor (5), wherein the lens holder (3) is provided with a thread (6) formed as an injection mould part and designed as a circumferential rip (14) having a profile in cross-section which is adapted to engage with the other thread (7) and arranged at a separation plane of the injection mould, and wherein the circumferential rip (14) is extending over a circumference section of less than 360 degrees, and the lens holder (3) comprise projections (8,9,10) extending in axial direction (X) of the objective lens (2) and radially from inside wall of the lens holder (3) and arranged to provide support for the objective lens (2) in a radial direction.

## Description

The invention relates to a camera module for a motor vehicle, comprising a lens objective, a lens holder holding said lens objective, and a back plate connected to said lens holder and holding an image sensor.

Automotive camera modules are exposed to temperatures varying over a large range, and are required to have excellent imaging performance over the whole temperature range occurring in practice. In many fixed-focus automotive camera modules, a major challenge is to retain the focus over the temperature envelope T. For low f/# lenses, the distance between the image and the sensor must be controlled at a scale of micrometers. However, the lens holder expands with increasing temperature, and therefore the distance between the lens objective and the image sensor increases along the optical axis with increasing temperature, with the result that the sensor moves out of the image plane of the lens objective and the image quality deteriorates.

DE 10 2008 047 277 A1 discloses a camera module where a compensating tube is provided between a lens carrier and a lens barrel. The compensating body may have an inner thread into which the lens barrel may be screwed.

DE 102 61 973 A1 discloses a camera module where the lens is indirectly held by a housing tube via a frusto-conical lens holding element which has a significantly smaller thermal expansion coefficient than the housing tube.

The camera modules of DE 10 2008 047 277 A1 and DE 102 61973 A1 provide for a compensation of the thermal expansion of the lens holder through a compensating element which, however, constitutes an additional part and makes the mounting of the camera module more laborious.

Furthermore it is known from the EP 2 942 938 A1 to provide the lens objective with an outer thread and the lens holder with a co-operating inner thread. The inner thread extends over a lower region of the tubular part of the lens holder while the outer thread extends over the full length or nearly the full length of the tubular part of the lens objective. Furthermore the connection can be further fixed by a glue joint.

The problem underlying the present invention is to provide a camera module which can be easily mounted, be produced with reduced costs and which is designed to work also under difficult thermal conditions properly.

The invention solves this object with the features of the independent claims. According to the invention, one of the threads is designed as a circumferential rip having a profile in cross-section which is adapted to engage with the other thread, wherein the rip is extending over a circumference section of less than 360 degree. The circumferential rip can be seen here as a thread which is reduced to a section of less than one turn, which engages into the other thread. The rip serves here as a reduced engaging section, which transforms the rotation movement of one part of the objective lens or the lens holder to an axial movement. Because of the extension of less than 360 degree the rip does not comprise a section in which the rip overlaps in axial direction which enables a cost effective production as an injection mould part. Furthermore possible internal tensions because of different coefficients of thermal expansions are prevented. Furthermore the assembly process can be performed much easier as the risk of internal blocking of the threads is reduced significantly.

The engagement of the rip into the other thread can be further improved when the rip is arranged in an angle related to the circumferential direction, and the angle corresponds to the pitch of the other thread.

Furthermore the rip may consist of several single pins or cams. The several single pins or cams adding each other to the rip and are arranged therefore corresponding to the turns of the other threads. By using single pins or cams the friction may be reduced without any disadvantage for the attachment movement of the objective lens.

Furthermore the lens objective or the lens holder may comprise one or several guiding projections. The reduced thread may have the disadvantage that the objective lens and the lens holder are not guided like with complete threads extending over a larger section of both parts. This possible disadvantage may be compensated by the guiding projections, which define the position of the objective lens versus the lens holder and guide the objective lens when moving to the attachment position. Finally also the attachment position of the objective lens may be defined by the projections, which is especially important as the objective lens need to be positioned in a pre-defined position in relation to the image sensor.

The projections are extending preferably in axial direction of the objective lens, so that the axial movement of the objective lens may be guided with a high precision.

It is further preferred that the other thread separates a first and a second section of the objective lens or the lens holder having different diameters, and the projections are arranged in the gap between the objective lens and the lens holder resulting from the different diameters. The sections having the different diameter are realized by a step in the objective lens or in the lens holder from a smaller to a bigger diameter, wherein the thread is arranged in the section with the bigger diameter if the step is in the objective lens. If the step is in the lens holder the thread is arranged in the section with the smaller diameter. Because of the sections having the different diameters a gap is created between the objective lens and the lens holder. In this gap the projections may be arranged to realize also in this section a guiding function and to precise the guiding of the objective lens when moving to the attachment position.

In this case it is further suggested that the circumferential rip and the projection do not overlap in circumferential direction, which facilitates a production as an injection mould part. Furthermore both parts are supported to each other by the projection in a circumference section in which both parts are not in contact via the rip and the other thread.

Furthermore at least two projections are provided, and the circumferential rip is arranged in circumferential direction between two projections. The circumferential rip is enclosed at both ends by a projection, so that both parts are guided properly and positioned in a pre-defined orientation especially in the area of the rip, so that the other thread and the rip engage with a reduced risk of blocking.

It has been shown that it is sufficient when the rip extends over a circumference section of less than 120 degree. In this case for example three projections may be provided, which are distanced in angles of 120 degree and the rip is arranged between two projections.

In the following the invention shall be illustrated on the basis of preferred embodiments with reference to the accompanying drawings, wherein:
- Fig. 1: shows a lens holder in view from the top; and
- Fig. 2: shows the lens holder from Figure 1 in view according to cut F-F; and
- Fig. 3: shows the lens holder from Figure 1 in view according to cut E-E; and
- Fig. 4: shows an objective lens; and
- Fig. 5: shows the objective lens with the lens holder.

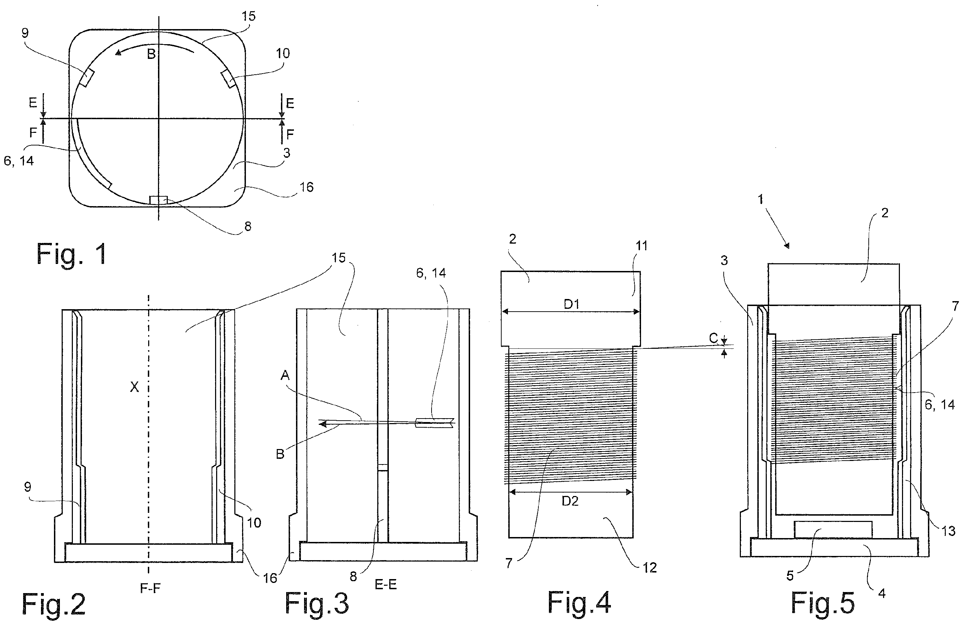

In the figures 1 to 3 a lens holder 3 and in the figure 4 an objective lens 2 according to the invention are shown. In figure 5 the whole camera module 1 is shown which comprise as basic components the lens holder 3, the objective lens 2 and a back plate 4 with an image sensor 5.

The lens holder 3 comprises a cylindrical tubular shaped basic body 15 and a radial attachment flange 16. The objective lens 2 is designed as a cylinder having two different sections 11 and 12 with different diameters D1 and D2. Both parts comprise a thread 6, 7 to connect both parts with each other. The thread 7 of the objective lens 2 is an outer thread and is arranged between the sections 11 and 12 with the different Diameters D1 and D2 or in other words it is worked into the section 11 with the bigger diameter. The thread in the lens holder 3 is made as an inner thread 6 at the inner radius of the tubular basic body 15. The thread 6 in the lens holder 3 is reduced to a circumferential rip 14 arranged in an angle A related to the circumferential direction B. The angle A of the circumferential rip 14 corresponds to the pitch of the thread 7 in the objective lens 2 which is designated in Figure 4 as the angle C. Furthermore the circumferential rip 14 comprises a profile in cross-section which is adapted to engage with the thread 7. The circumferential rip 14 may have for example a triangular or trapezoidal cross-section.

Furthermore three projections 8, 9 and 10 are provided at the lens holder 3, which are designed as radial to the inside directed walls. The three projections 8, 9 and 10 are directed in axial direction X of the lens holder 3 and of the objective lens 2 and parallel to each other in a section of the tubular basic body 15 adjacent to the attachment flange 16. The circumferential rip 14 extends in this embodiment over an angle of less than 120 degree in circumference direction B and is arranged with respect to the circumference direction B between the projections 8 and 9, so that the rip 14 does not overlap the projections 8 and 9 as shown in Figure 1.

The advantage of this design is that the lens holder 3 may therefore manufactured as an injection mould, as the thread 6 is designed as a single circumferential rip 14, so there are no overlapping turns of the thread 6 in axial direction which would make a manufacturing process as an injection mould difficult. The inventive solution enables especially a manufacturing process as an injection mould with a separation plane separating the tool parts arranged essential perpendicular to the axial direction X. The separation plane may be arranged here approximately through the middle of the circumferential rip 14, wherein the separation plane runs preferably through the tip line of the rip 14 in the angle A to the circumferential direction B at least in the area of the rip 14.

As the objective lens 2 got in the lower section 12 a smaller diameter D2 a gap 13 is created between the lower section 12 of the objective lens 2 and the opposing inner wall of the lens holder 3. In this gap 13 the projections 8, 9 and 10 are arranged, so that the projections 8, 9 and 10 provide a support for the objective lens 2 in radial direction in the attachment position like shown in Figure 5. The projections 8, 9 and 10 are provided at their top sides facing towards the insert opening for the objective lens 2 as inclined surfaces, which facilitate the insertion movement of the objective lens 2. Furthermore the inclined surfaces are used to center the objective lens 2 versus the lens holder 3.

When the objective lens 2 is inserted into the insert opening with the section 12 with the smaller diameter 12 the objective lens 2 will abuts in a first step with the thread 7 at the circumferential rip 14 while the section 12 with the smaller diameter D2 is positioned between the projections 8, 9 and 10. In a next step the objective lens 2 is turned and the circumferential rip 14 engages into the thread 7 of the objective lens 2 while the objective lens 2 performs an axial movement in axial direction X. This axial movement is centered by the contact of objective lens 2 in a first step with the inclined top surfaces of the projections 8, 9 and 10 and afterwards by the side surfaces of the projections 8, 9 and 10. The projections 8, 9 and 10 fix the objective lens 2 in a predefined position with respect to the image sensor 5 which is important for generating a precise signal.

In a next step or in a step before the back plate 4 with the image sensor 5 arranged thereon is inserted and mounted in the flange section 16 of the lens holder 2.

Embodiments of the invention can be described with reference to the following numbered clauses, with preferred features laid out in the dependent clauses:
1. A camera module (1) for a motor vehicle, comprising
   - a lens objective (2),
   - a lens holder (3) holding said lens objective (2), and
   - a back plate (4) connected to said lens holder (3) and holding an image sensor (5), wherein
   - the lens holder (3) and the lens objective (2) are provided with threads (6,7), characterized in that
   - one of the threads (6,7) is designed as a circumferential rip (14) having a profile in cross-section which is adapted to engage with the other thread (7), wherein
   - the circumferential rip (14) is extending over a circumference section of less than 360 degree.
2. A camera module (1) in clause 1 characterized in that
   - the circumferential rip (14) is arranged in an angle (A) related to the circumferential direction (B), and
   - the angle (A) corresponds to the pitch (C) of the other thread (7).
3. A camera module (1) in any one of the preceding clauses, characterized in that
   - the circumferential rip (14) consists of several single pins or cams.
4. A camera module (1) in any of the preceding clauses, characterized in that
   - the lens objective (2) or the lens holder (3) comprise one or several guiding projections (8,9,10).
5. A camera module (1) in clause 4, characterized in that
   - the projections (8,9,10) are extending in axial direction (X) of the objective lens (2).
6. A camera module (1) in clause 4 or 5, characterized in that
   - the other thread (7) separates a first and a second section (11,12) of the objective lens (2) or the lens holder (3) having different diameters (D1,D2), and
   - the projections (8,9,10) are arranged in a gap (13) between the objective lens (2) and the lens holder (3) resulting from the different diameters (D1,D2).
7. A camera module (1) in one of the clauses 4 to 6, characterized in that
   - the circumferential rip (14) and the projection (8,9,10) do not overlap in circumferential direction (B).
8. A camera module (1) in one of the clauses 4 to 7, characterized in that
   - at least two projections (8,9,10) are provided, and
   - the circumferential rip (14) is arranged in circumferential direction (B) between two projections (8,9,10).
9. A camera module (1) in any one of the preceding clauses, characterized in that
   - the circumferential rip (14) extends over a circumference section of less than 120 degree.

## Claims

1. A camera module (1) for a motor vehicle, comprising
- a lens objective (2) having an outer thread (7),
- a lens holder (3) holding said lens objective (2), and
- a back plate (4) connected to said lens holder (3) and holding an image sensor (5), wherein
- the lens holder (3) is provided with a thread (6) formed as an injection mould part and designed as a circumferential rip (14) having a profile in cross-section which is adapted to engage with the other thread (7) and arranged at a separation plane of the injection mould, and wherein
- the circumferential rip (14) is extending over a circumference section of less than 360 degree, and
- the lens holder (3) comprise projections (8,9,10) extending in axial direction (X) of the objective lens (2) and radially from inside wall of the lens holder (3) and arranged to provide support for the objective lens (2) in a radial direction.

2. A camera module (1) in claim 1 **characterized in that**
- the circumferential rip (14) is arranged in an angle (A) related to the circumferential direction (B), and
- the angle (A) corresponds to the pitch (C) of the other thread (7).

3. A camera module (1) in claim 1, **characterized in that**
- the outer thread (7) separates a first and a second section (11,12) of the objective lens (2) having different diameters (D1,D2), and
- the projections (8,9,10) are arranged in a gap (13) between the objective lens (2) and the lens holder (3) resulting from the different diameters (D1,D2).

4. A camera module (1) in claim 1, **characterized in that**
- the circumferential rip (14) and the projection (8,9,10) do not overlap in circumferential direction (B).

5. A camera module (1) in any one of the preceding claims, **characterized in that**
- the circumferential rip (14) extends over a circumference section of less than 120 degree.
